# EUROPEAN PATENT APPLICATION

(11) **EP 4 385 919 A1**
(43) Date of publication of application: **19.06.2024**
(21) Application number: 22214346.3
(22) Date of filing: 16.12.2022
(51) Int. Cl.: B65G 1/04, B65G 1/137

(54) **AN AUTOMATED WAREHOUSE INTERVENTION SHUTTLE**

(71) Applicant: MOVU, 9160 Lokeren (BE)
(72) Inventor: Vandemergel, Luc, 8020 Oostkamp (BE)
(74) Representative: IP HILLS NV

(57) **Abstract**

An intervention shuttle for human intervention in an automated warehouse, the warehouse including at least one storage lane along a first direction and at least one transit lane along a second direction transverse to the first direction, wherein the intervention shuttle is configured to be driven manually on a first track extending along the at least one storage lane and on a second track extending along the at least one transit lane, wherein at least part of the first track and the second track is located in a first substantially horizontal plane, wherein the intervention shuttle includes a first set of at least four wheels configured to engage one of the first track and the second track.

## Description

### Field of the Invention

The present invention generally relates to an automated warehouse intervention shuttle.

### Background of the Invention

Automated warehouses and automated warehouse shuttle systems are generally known. Warehouses include relatively large storage structures, generally structured along a plurality of substantially parallel lanes. The storage structures are arranged to provide storage locations to goods, often palletized goods. Said storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse aisles may or may not be provided with tracks. Additionally, lift systems may allow connections between various levels of the storage structure. Storage lanes usually do not include a solid floor, whereas transverse aisles may be provided with a solid floor at predetermined levels. The system further includes warehouse shuttles, in particular mobile robots, which are configured to move along said tracks, and which are configured to transport goods and/or goods carriers, such as for example pallets, to and from said storage locations in the storage structure. An automated shuttles system can comprise a plurality of automated shuttles which are often integrated into, and controlled by, a central warehouse management control system.

When one of said shuttles needs servicing, the shuttle can generally be moved to a servicing area outside of an operational area of the shuttle system, but it may happen that a shuttle is broken and cannot be moved automatically out of the system. In other situations, goods or goods carriers, such as pallets, may be broken or may have fallen off their storage location and may hinder normal warehouse operations. A human intervention may then be necessary at the location of hindrance. Given the lack of solid floors on many or all levels, in particular in storage lanes, and given the potential heights of such storage structures in warehouses, it may be relatively difficult and dangerous for a human to reach the location of hindrance where a human intervention is needed. Moreover, material for reparation often needs to be taken along, which is relatively difficult in combination with safety measures for working at heights. Moreover, automated shuttles used to move goods in and out of the warehouse may not be used for human transport because of safety restrictions.

It is therefore an aim of the present invention to solve or at least partly alleviate the above-mentioned problems. In particular, the present invention aims at providing an intervention shuttle for human intervention in an automated warehouse which can allow relatively safe movement of a human within an automated warehouse.

### Summary of the Invention

To this aim, there is provided an intervention shuttle for human intervention in an automated warehouse according to the features of claim 1. In particular, the intervention shuttle for human intervention in an automated warehouse is configured to safely carry a human to a place of intervention in an automated warehouse. The intervention shuttle is configured to be driven manually, which is a safety measure for an intervention shuttle to carry a human in an automated warehouse and allows interventions in a section of a warehouse where the automated shuttle system is down. Such an automated warehouse includes at least one storage lane along a first direction and at least one transit lane along a second direction transverse to the first direction. In general, such a warehouse can include a plurality of storage lanes configured to store goods, which lanes are substantially in parallel to each other. The warehouse can further include a plurality of transit lanes which are also substantially in parallel to each other, and which are substantially transverse to said storage lanes. The storage lanes and the transit lanes may extend over a plurality of levels of the automated warehouse. At least one first track extends along the at least storage lane, and at least one second track extends along the at least one transit lane. In case the at least one storage lane and/or the at least one transit lane extend over a plurality of levels, the at least one storage lane can include a plurality of first tracks, each first track extending along the storage lane on a different level. Analogously, the at least one transit lane may include a plurality of second tracks, each second track extending along said transit lane on a different level. The intervention shuttle is configured to be driven on at least a first track extending along the at least one storage lane and on at least a second track extending along the at least one transit lane, said first track and said second track extending on a same level of the automated warehouse. In other words, the intervention shuttle is configured to be driven along at least a first track which intersects substantially transversely at least a second track, said first track and said second track being on a same level of the automated warehouse. At least part of said first track and said second track is located in a first substantially horizontal plane. In other words, the first substantially horizontal plane includes at least part of a running face or a gauge face of said first track and of said second track. The intervention shuttle includes a first set of at least four wheels configured to engage one of the first track and the second track. The intervention shuttle further includes a second set of at least four wheels configured to engage the other of said first track and said second track. In other words, a first set of wheels serves for driving the shuttle on at least a first track along the at least one storage lane, and a second set of wheels serves for driving the shuttle on at least a second track along the at least one transit lane, or vice versa. In an inventive way, the second set of wheels is configured to engage said other of the first track and the second track in a second substantially horizontal plane located above or beneath the first substantially horizontal plane. In other words, said first set of wheels and said second set of wheels are configured to engage a different part, in particular a different running face or gauge face of the rails, of the first track or of the second track than the part engaged by the first set of wheels. Thereto, the first set of wheels and the second set of wheels are placed at a different height on the intervention shuttle. In this way, the intervention shuttle can be manually driven along at least a first track and at least a second track which are substantially transverse to each other and can be manually switched from said first track to said second track relatively easily.

The intervention shuttle can advantageously include a third set of at least two wheels configured to engage said other of the first track and the second track in the second substantially horizontal plane, the at least two wheels of the third set extending beyond a contour of the shuttle. Said third set of at least two wheels is thus configured to engage the same track as the second set of at least four wheels, which is one of the first and the second track. In other words, wheels of the second set and of the third set are oriented substantially in parallel. The at least two wheels of the third set of wheels extend beyond a contour of the shuttle. In particular, the at least two wheels of the third set can extend in front of the intervention shuttle and/or behind the intervention shuttle in a driving direction of said wheels. Said third set of wheels can facilitate a manual engagement of the intervention shuttle on one a first track or a second track. For example, if the second set of wheels, and thus also the third set of wheels, are configured to engage the first track, then the third set of wheels can help in manually engaging the intervention shuttle into said first track, in particular by first pushing forward said intervention shuttle under an angle with the first track while only said third set of wheels extending beyond a contour of the shuttle engages said first track. The same is valid if the second set of wheels is configured to engage the second track.

The third set of wheels can preferably be mounted to the intervention shuttle at a height which is higher than a height at which the second set of wheels are mounted to the intervention shuttle. Since the second set of wheels and the third set of wheels are configured to engage the same track, in particular one of the first track and the second track, a higher mounting height of the third set of wheels implies that the second set and the third set do not engage one of the first track and the second track simultaneously when the intervention shuttle is standing on said first or second track in a substantially horizontal position. In this way, the third set of wheels can be used only for helping to change track while the second set of wheels may be used for driving on one of said first track or said second track.

The first set of wheels can for example be configured to engage the second track in the first substantially horizontal plane and the second set of wheels can for example be configured to engage the first track in the second substantially horizontal plane. Even when the first track and the second track lie in a same level of the warehouse, the first set of wheels and the second set of wheels are configured to engage a different part of said first or second track. In particular, the first track extending along a storage lane may not only be configured to guide an automated warehouse shuttle and an intervention shuttle, but may also be configured to store goods, for example palletized goods. Thereto, the first track may for example include at least two rails, each rail including two substantially parallel surfaces, a first surface configured to receive wheels of an automated warehouse shuttle, also called a rolling face of the rail, and a second surface configured to support stored goods. The first surface of the first track is preferably included in the first substantially horizontal plane, in which also lies a rolling face of a rail of the second track, such that automated warehouse shuttles can freely move from a first track in a storage lane to a second track in a transit lane. The second surface, or the support surface, of the first track is included in the second substantially horizontal plane, which preferably lies above the first substantially horizontal plane. To facilitate a manual change of the intervention shuttle between a first track and a second track, the second set of wheels may be configured to engage the first track in the second substantially horizontal plane and may thus in particular engage the support surface of the rails of the first track, which surface is not used by an automated warehouse shuttle for driving. In this way, in particular thanks to inventively exploiting the specificities of the first track along a storage lane, the intervention shuttle can be manually driven along a storage lane and along a transit lane of an automated warehouse without a need for a change of wheels or a change of height of wheels.

The third set of wheels can advantageously include at least four wheels, the at least four wheels of the third set extending beyond a contour of the shuttle. As explained before, the third set of wheels is configured to engage the same track as the second set of wheels, which is preferably the first track. The second set of at least four wheels can thus for example allow the intervention shuttle to be driven along the first track extending in a storage lane, which can be done in two opposing driving directions. The third set of wheels preferably extends beyond the contour of the shuttle in said two opposing driving directions, two of the at least four wheels preferably extending beyond the contour of the shuttle in one direction and two more of the at least four wheels extending beyond the contour of the shuttle in the opposing direction. In other words, two wheels of the third set of wheels extend in front of the intervention shuttle while two more wheels of the third set of wheels extend behind the intervention shuttle. In this way, front and hind of the intervention shuttle can become interchangeable such that a turning around of the shuttle can be avoided.

It is preferred that the intervention shuttle has a substantially rectangular shape including four corners. A length and a width of the substantially rectangular shape of the intervention shuttle may at least partially be determined by a width of the first track and of the second track. The wheels of each of the first set and the second set of wheels are preferably located adjacent to said corners. In case of the intervention shuttle including a third set of wheels, the wheels of said third set of wheels are preferably also located adjacent to said corners. More preferably, at least one wheel of each set of wheels is located adjacent to each corner, the wheels of the first set and the wheels of the second set being located on different sides of the intervention shuttle resulting in the same corner. In this way, a relatively stable intervention shuttle can be provided.

At least two wheels, and preferably each wheel, of one of the first set of wheels and the second set of wheels, preferably of the first set of wheels, configured to engage the second track extending along the at least one transit lane can advantageously include a first portion on a first side of the wheel and a second portion on a second side facing away from said first side, the first portion having a first diameter which is larger than a second diameter of said second portion. The first diameter can for example be substantially 20 mm larger than the second diameter, or more or less. Thereto, the wheels may be provided with side plates which may be separately mountable to the wheels, or the wheels may be integrally shaped having a stepped cross-section. The second portion having a smaller diameter is configured to engage the first track or the second track while the first portion is configured to extend next to said respective track. The first portion having a larger diameter is preferably an outer side of the wheels such that they face away from each other. Alternatively, the wheels can be mounted such that the first portion forms an inner side of the wheels, the first sides facing each other. The first portion can improve guidance of the wheels on the track, preferably on the second track, in particular when at least one wheel engaging a first rail of the track and a second wheel engaging another rail of the same track each include said first and second portion with different diameters, thus preventing the intervention shuttle from slipping off the track.

The intervention shuttle can preferably include a brake configured to brake the first set of wheels and the second set of wheels simultaneously. It is preferred that said brake is operable by a single braking handle, which can simplify operation of the intervention shuttle and thus prevent accidents due to inadvertent and/or wrong operation. Alternatively, the first set of wheels and the second set of wheels may be configured to be braked by respective first and second brakes.

It may be especially advantageous for the intervention shuttle to include a manual braking handle configured to release the at least one brake of the shuttle as well as a manual crank drive configured to allow driving said intervention shuttle along the first and/or second track. The intervention shuttle may then be configured to move along the first and/or second track by simultaneously operating the manual braking handle and the manual crank drive. Instead of operating the brake to brake the wheels, the manual braking handle is configured to release the at least one brake of the shuttle. In other words, the brake is configured such that the first set of wheels and the second set of wheels are always blocked by said brake. In this way, the intervention shuttle is always blocked and cannot move along one of the first track or the second track except when a human intervener operates the braking handle. The user of the intervention shuttle thus needs to perform two actions simultaneously to move the intervention shuttle: operate the manual braking handle to unlock the wheels and operate the manual crank drive to move the intervention shuttle along one of the first track or the second track. Such a combined operation can provide for additional safety in the use of the intervention shuttle. Additionally, the manual braking handle may include a locking position in which the manual braking handle is locked such that the first set of wheels and the second set of wheels are free. Such a brake lock may be used when changing the intervention shuttle from a main lane into a storage lane or vice versa.

The intervention shuttle may comprise a blocking element configured to extend under the shuttle, the blocking element being movable between a blocking position and a free position, and the blocking element being configured to engage the first track in the blocking position. The blocking element may preferably be located in the intervention shuttle at a distance of the manual braking handle, more preferably near a side of the intervention shuttle opposite of a side where the manual braking handle is located. In this way, the intervention shuttle can be additionally locked when the manual braking handle is locked in a position freeing the wheels and is out of reach for the user. This may in particular happen when a user is still standing on a main lane, has just inserted the intervention shuttle into a storage lane and has thereto locked the manual braking handle into a position unbraking or freeing the wheels to push the intervention shuttle forward, just before entering into the intervention shuttle. In this way, the blocking element can provide additional safety to the intervention shuttle and allows two-directional use of the shuttle, in particular on a first track of a storage lane, thus avoiding turning of the shuttle.

The intervention shuttle can comprise at least one pair of removable tilt protection hooks configured to extend outwardly from the shuttle, in particular sideways with respect to a driving direction of the shuttle. Such tilt protection hooks may in particular be useful for driving on the second track extending along the main lane. Since the main lane is transverse to the one or more storage lanes, the second track crosses the one or more first tracks. The tilt protection hooks are configured to extend under said one or more first tracks at crossings to prevent tilting of the intervention shuttle. Said tilt protection hooks may further be configured to extend at least partly under or into a protection rail which may extend substantially in parallel to a rail of the second track. A first tilt protection hook of said at least one pair may extend towards a left side of the second track and a second tilt protection hook may extend to a right side of the second track. The intervention shuttle preferably includes two pairs of tilt protection hooks, such that the two pairs may be mounted at a distance of each other, for example towards or near a front side and towards or near a back side seen in the second direction, but still extending sideways. The tilt protection hooks are removably mountable to the intervention carrier such that said hooks may be removed when the intervention shuttle is transferred from a first track to a second track or vice versa. Said removable mounting may include any suitable mounting elements known to the person skilled in the art, such as screws, hooks, bolts, etcetera.

The intervention shuttle may preferably include a safety bar along at least one side of the shuttle. More preferably, the safety bar extends along all four sides of the intervention shuttle. Such a safety bar can prevent a human intervener to fall out of the intervention shuttle. Additionally, the safety bar can provide a relatively easy grip to the human intervener to manipulate the intervention shuttle, for example to lift the intervention shuttle when changing the intervention shuttle between a storage lane and a main lane. A safety bar along all sides can then provide a shuttle which can be used in all directions without the need for turning the shuttle around into a preferred direction. According to safety requirements, a user must be safely secured with a harness when working at heights. Thereto, the intervention shuttle can include with a hook, for example an eye bolt, configured to receive a safety line shackle. Alternatively, the safety bar can be configured to receive an attachment of such a harness to keep more freedom of movement.

A weight of the intervention shuttle can advantageously be lower than substantially 40kgs. In this way, the shuttle can be carried and moved from one track to another track relatively easily by a single intervener. At the same time, the intervention shuttle needs to be sufficiently solid and sturdy for carrying an adult user, often together with some intervention material, along the first and second tracks in a safe way.

A height of the intervention shuttle can preferably be lower than 0.5 m. A relatively low height can still provide a relatively safe intervention shuttle, for example for a user sitting in the intervention shuttle on hands and knees. The relatively low height can also provide a relatively manageable shuttle and can allow to keep a weight of the shuttle relatively low.

### Brief Description of the Drawings

Fig. 1 illustrates a perspective view of a part of an automated warehouse system including three automated warehouse shuttles;
Fig. 2 shows a perspective view on a preferred embodiment of an intervention shuttle according to the invention;
Fig. 3 shows a side view on the intervention shuttle of Figure 2 on a track in a storage lane;
Fig. 4 shows a side view on the intervention shuttle of Figure 2 on a track in a main lane;
Fig. 5a shows a perspective top view on a storage lane including two intervention shuttles shown in Figure 2 and Fig. 5b shows a perspective detailed view on one of the corners of the intervention shuttle shown in Figure 2;
Fig. 6 shows a side view of the intervention shuttle of Figure 2 before insertion into a storage lane;
Fig. 7 shows an enlargement of a corner of the intervention shuttle shown in Figure 3;
Fig. 8 shows a side view of the intervention shuttle of Figure 2 when inserted into a storage lane; and
Fig. 9 and 10 illustrate a front view and a perspective view respectively on two wheels, one wheel of the second set and one of the third set of wheels respectively.

### Detailed Description of Embodiment(s)

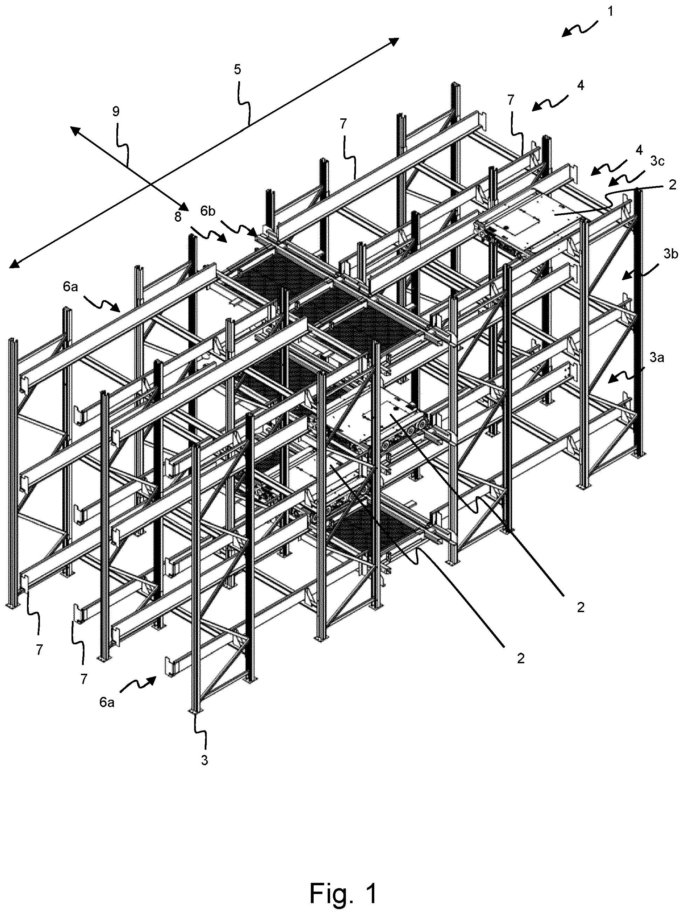

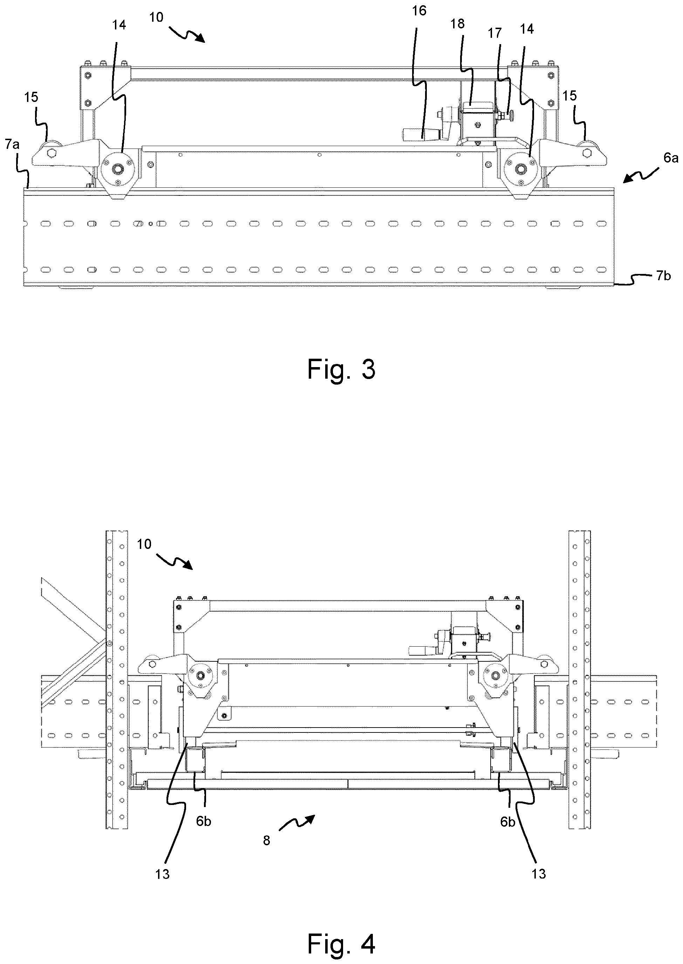

Figure 1 illustrates a perspective view of part of an automated warehouse system 1 including three automated warehouse shuttles 2. The warehouse system 1 generally includes a relatively large storage structure 3 configured to received goods for storage, for example palletized goods. The storage structure 3 can extend over a plurality of levels, of which for example three levels 3a, 3b, 3c are shown in Figure 1. The storage structure 3 generally extends along at least one storage lane 4 in a first direction 5, and preferably a plurality of storage lanes, which are substantially in parallel to each other. Transverse aisles, generally called transit lanes or main lanes 8, may connect said substantially parallel storage lanes 4, which transverse aisles may also be provided with tracks extending in a second direction 9 substantially transverse to the first direction 5. Storage lanes 4 usually do not include a solid floor, whereas transit lanes 8 may be provided with a solid floor, for example gratings, at predetermined levels. A first track 6a including at least one rail 7, preferably a pair of rails at a distance of each other, extend in said storage lane 4, preferably on every level 3a, 3b, 3c of each storage lane 4. Said rails 7 can preferably include two substantially horizontal surfaces: an upper surface 7a configured to support stored goods and a lower surface 7b (see Fig. 3) configured to receive wheels of an automated shuttle. Said rails may thereto have a specific shape, for example a stepped shape including a lower flange extending inwardly towards the other rail of a pair of rails, and an upper flange extending outwardly, so extending away from the other rail of a pair of rails. The upper flange may then be configured to receive goods for storage while the lower flange may guide the automated warehouse shuttles 2. Other shapes including an upper surface and a lower surface may be used as well. A second track 6b extend in a main lane or transit lane 8. Said second track 6b may have a similar shape as the first track 6a, or more preferably, may have a different shape, since no goods are stored in said main lane 8.

Automated warehouse shuttles 2 may be configured to drive along tracks 6a and 6b of storage lanes 4 and of main lanes 8 respectively of a same level without the shuttles being oriented differently. In other words, shuttles do not turn into another direction. Instead, the shuttles preferably include two sets of wheels which are lowered and/or risen according to the lane in which they are driving. Thereto, at least part of the first track 6a and the second track 6b is located in a first substantially horizontal plane to allow for the automated warehouse shuttles 2 to pass from a first track 6a to a second track 6b. In particular, said first substantially horizontal plane may include the lower surface of a rail 7 of a first track 6a as well as a running face of a rail of a second track 6b. However, for safety reasons, an intervention shuttle for human intervention in an otherwise fully, or least partly, automated warehouse is not allowed to be driven automatically. Providing an intervention shuttle for human intervention in an automated warehouse which is configured to be driven safely along tracks in two substantially transverse directions has proven to be a challenge.

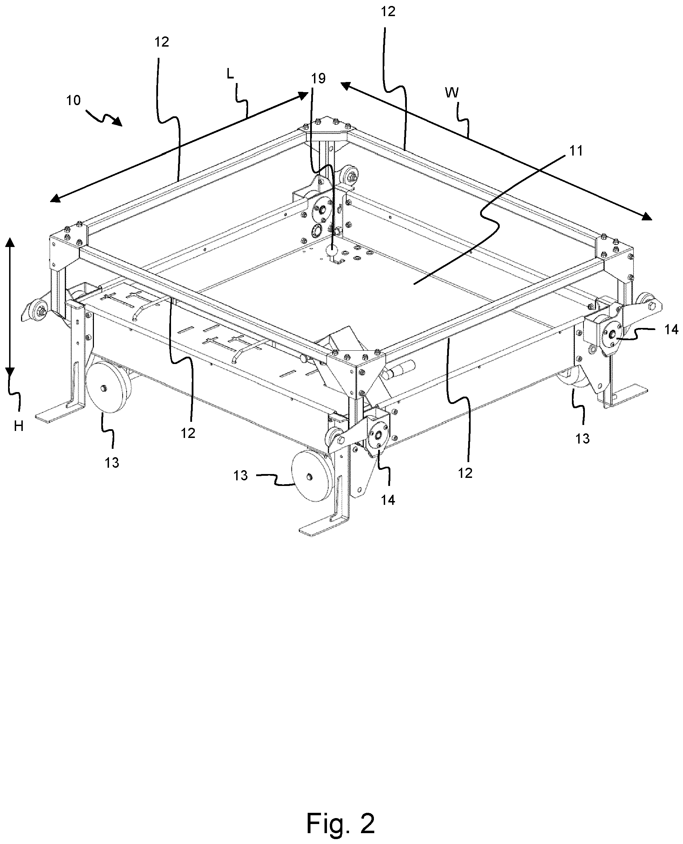

Figure 2 shows a perspective view on a preferred embodiment of an intervention shuttle 10 according to the invention. The intervention shuttle 10 is configured to bring or transport a human intervener to a location in the automated warehouse where an intervention by a human is needed. This can for example be caused by goods or an automated shuttle which are broken or badly positioned, and/or which block a track. In other situations, a track may be broken such that automated shuttles cannot pass anymore. The intervention shuttle preferably has a substantially rectangular shape including four corners. A size of said intervention shuttle, in particular a length and a width of the shuttle, may depend on the width between rails of the first track and the second track of the automated warehouse. As an example, a length L, defined along the first direction 5, may be comprised in a range of 1000 mm to 1500 mm, preferably 1100 mm to 1400 mm, more preferably in a range of 1200 to 1300 mm, for example between more or less 1230 mm and more or less 1250 mm, for example substantially 1240 mm. A width W, defined along the second direction 9, may be comprised in a range of 900 mm to 1400 mm, preferably 1000 mm to 1300 mm, more preferably in a range of 1100 to 1200 mm, for example between more or less 1140 mm and more or less 1160 mm, for example substantially 1150 mm. The intervention shuttle also includes a platform 11 configured to receive and support the human intervener. The intervener can for example sit on hands and knees or squat, given the relatively low heights in automated warehouses. The shuttle can comprise a safety bar 12 along at least one side of the shuttle, preferably along all sides of the shuttle. The safety bar 12 can enclose the platform 11 such that a human intervener can hold the safety bar in any direction, when sitting in the intervention shuttle or when manipulating the intervention shuttle, for example at a crossing of a main lane and a storage lane. The intervention shuttle can further include at least one hook, for example a, eye bolt (not shown), configured to receive a safety line shackle such that the human intervener can secure himself or herself to the shuttle when sitting in the shuttle. A total height H of the intervention shuttle 10, measured from wheels to is preferably lower than 0.5 m, more preferably lower than 450 mm, for example around 410 mm. A weight of the shuttle is preferably lower than substantially 40kg, more preferably lower than 35 kg, such that a single human intervener can manipulate the shuttle relatively easily. The intervention shuttle is preferably configured to allow transportation of a single human intervener, optionally with one or more tools, up to a total loading of for example 150 kg.

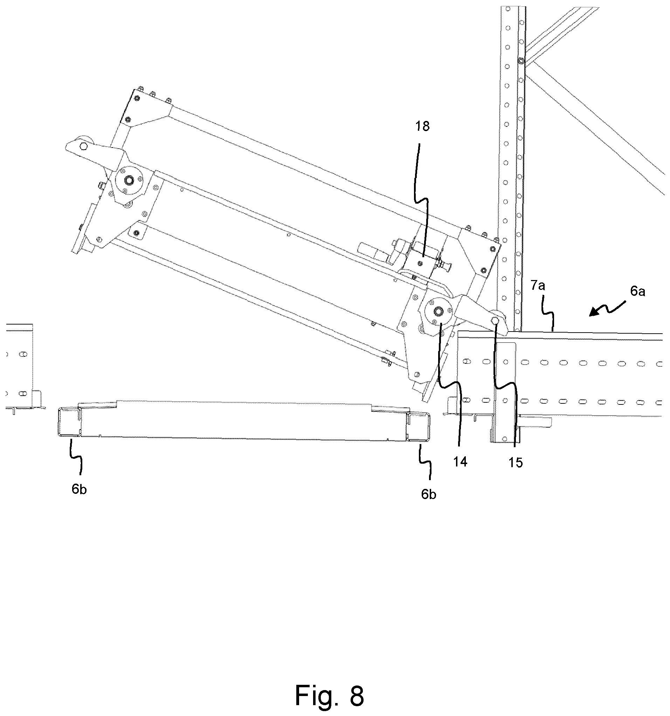

Figure 3 shows a side view on the intervention shuttle of Figure 2 on a track in a storage lane, whereas Figure 4 shows the intervention shuttle of Figure 2 on a track in a main lane. The intervention shuttle is configured to be driven manually along a first track 6a extending along the storage lane 4 and along a second track 6b extending along the transit lane 8. Thereto, the intervention shuttle 10 includes a first set of at least four wheels 13 configured to engage preferably the second track 6b in the first substantially horizontal plane. The intervention shuttle 10 further includes a second set of at least four wheels 14 configured to engage preferably the first track 6a in a second substantially horizontal plane located preferably above the first substantially horizontal plane. In other words, the first set of at least four wheels 13 are mounted to the intervention shuttle 10 at a lower level than a mounting of the second set of at least four wheels 14 to said shuttle 10, as can be seen in Figure 2. A diameter of the wheels 13 of the first set may be different from a diameter of the wheels 14 of the second set, but this diameter does not compensate for the difference in height of mounting of the wheels to the intervention shuttle such that a respective running face of the at least four wheels 13 of the first set of wheels is at a different height than a respective running face of the at least four wheels 14 of the second set of wheels. Since an automatic rise or lowering of wheels to change from a first track 6a to a second track 6b or vice versa is not suitable for an intervention shuttle 10, the intervention shuttle 10 is configured in an inventive way to be driven or guided along another part of the rails, in particular, of the rails of the first track 6a, different from the part of the rails configured to be engaged by the automated warehouse shuttles 2. More in particular, the second set of wheels 14 of the intervention shuttle 10 are configured to engage an upper surface 7a of the rails of the first track 6a, which upper surface 7a is generally primarily configured to support storage goods. In this way, no change between sets of wheels is needed. At least one wheel of each of the first set and the second set of at least four wheels 13, 14 is preferably mounted near each corner of the intervention shuttle 10 to enhance stability of the intervention shuttle 10. Wheels 13 of the first set of wheels are preferably mounted substantially under the intervention shuttle 10, whereas wheels 14 of the second set of wheels are preferably mounted to an outside of the intervention shuttle 10. The intervention shuttle 10 can advantageously include a third set of at least two wheels 15, preferably of at least four wheels, configured to engage the first track 6a in the second substantially horizontal plane. The at least two wheels, or preferably at least four wheels 15, of the third set extend beyond a main contour of the shuttle, which may for example be determined by the substantially rectangular shape of the intervention shuttle 10 including the second set of wheels 14, or by the safety bar 12 if any. At least one wheel of the third set of wheels 15 is preferably mounted near each corner of the intervention shuttle 10. Since wheels of both the second set and of the third set are configured to engage the first track 6a, the wheels 15 of the third set of wheels are mounted in front of, or behind, the wheels 14 of the second set of wheels, seen in a driving direction of said wheels, in particular in the first direction 5. So, extending beyond the contour of the intervention shuttle 10 includes, as illustrated in Figure 3, extending to the front of the intervention shuttle or extending behind the intervention shuttle, in the direction of driving of said wheels. The third set of wheels 15 are preferably mounted to the intervention shuttle 10 at a height which is higher than a height at which the second set of wheels 14 are mounted to the intervention shuttle 10. At the same time, a diameter of the wheels of the third set of wheels 15 is preferably smaller than a diameter of the wheels of the second set of wheels 14. As a result, wheels of the third set of wheels 15 do not engage the first track 6a when the intervention shuttle 10 is in a substantially horizontal position, in other words, when the intervention shuttle is supported by the wheels of the second set of wheels 14 on the support surface 7a of the rails of the first track 6a. The wheels of the third set of wheels 15 can engage said support surface 7a of the rails of the first track 6a when the intervention shuttle is held in a tilted position, as will be explained under Figure 8.

Figure 4 shows a side view on the intervention shuttle 10 of Figure 2 on a second track 6b in a main lane 8. Rails of the second track 6b may have a different shape than a rail of the first track 6a. Rails of the second track 6b may for example have a substantially C-shaped cross-section. At least two wheels, and preferably each wheel, of the first set of wheels 13 include a first portion on a first side of the wheel and a second portion on a second side facing away from said first side, the first portion having a first diameter which is larger than a second diameter of said second portion. In other words, wheels of said first set of wheels 13 preferably have a stepped cross-section including a running face formed by the second portion having the smaller diameter. The first portion having a larger diameter is then configured to move along a side of the rail, an outer side or an inner side of the rail, to prevent the intervention shuttle 10 from slipping off the rail.

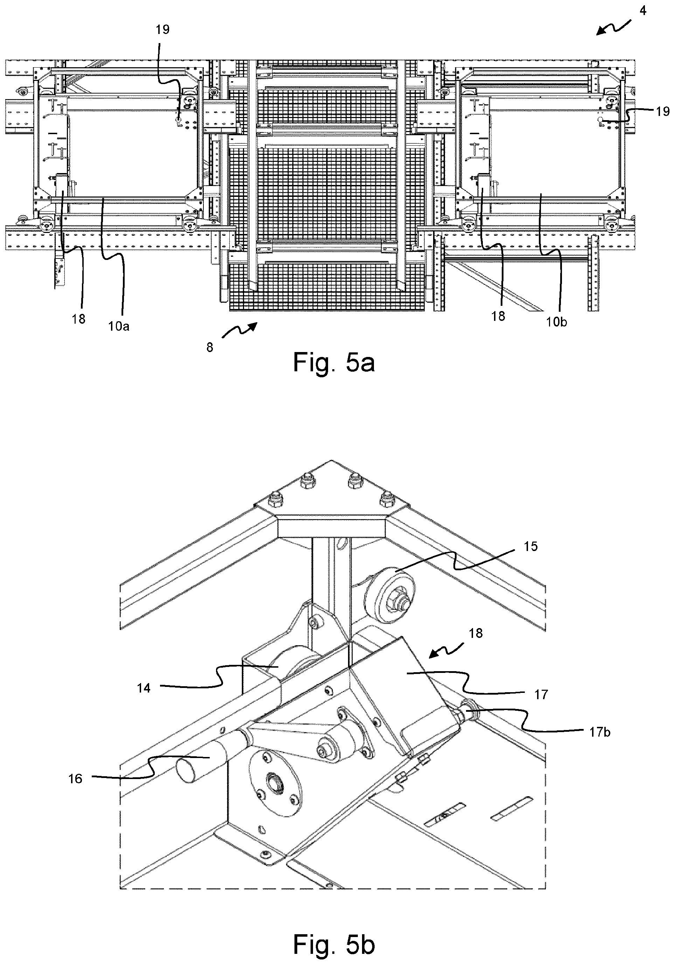

Figure 5a shows a perspective top view on a storage lane 4 including two intervention shuttles 10a, 10b shown in Figure 2, and Figure 5b shows a perspective detailed view on one of the corners of the intervention shuttle 10 of Figure 2. The two intervention shuttles 10 are located on either side of a crossing of a storage lane 4 with a transit lane 8. As mentioned before, the intervention shuttle 10 is configured to be driven manually. Thereto, the intervention shuttle 10 can include a manual crank drive configured to allow driving said intervention shuttle along the first and/or second track. Said manual crank drive may for example include a handle 16 configured to be rotated manually to drive the intervention shuttle 10. The intervention shuttle can further comprise a manual braking handle 17 configured to release the at least one brake of the shuttle. For safety reasons, it is preferred that all the wheels of the first set of wheels 13 and of the second set of wheels 14 are always blocked by a brake, except when the manual braking handle 17 is operated. Operating the manual braking handle 17 thus has the opposite effect of a normal brake: operating the manual braking handle 17 releases the wheels instead of blocking said wheels. To move the intervention shuttle 10, the user thus needs to simultaneously operate the manual braking handle 17 and the manual crank drive handle 16. Since the manual crank drive handle 16 and the manual braking handle 17 need to be operated simultaneously for driving, they are preferably mounted close to each other, for example on a same side of the intervention shuttle 10, in particular on a same drive unit 18 as shown in Figure 5b. The brake system may additionally include a position in which the wheels of the first set of wheels 13 and of the second set of wheels 14 are free to rotate without a human intervener operating the manual braking handle 17. Such a position may for example be actuatable by turning a dedicated knob or brake lock 17b or in any other way. This position may for example be used when changing from the second track 6b to the first track 6a, as will be explained later. When a user is standing on the grating 20 of the main lane 8 near a storage lane 4 as shown in Figure 5, the user may have access to the manual braking handle 17 of the intervention shuttle 10b positioned on the drive unit 18 near the side of the intervention shuttle close to the main lane 8, but not to the respective manual braking handle 17 on the drive unit 18 of the intervention shuttle 10a, where said handle is positioned on the side at a distance from the main lane 8. In the latter case, it may be advantageous for the intervention shuttle 10, 10a, 10b to comprise a blocking element 19, in addition to a braking system of the wheels, configured to extend under the intervention shuttle. The additional blocking element 19 is preferably positioned near an opposite side of the intervention shuttle 10, 10a, 10b with respect to the side where the drive unit 18 is positioned. In this way, in case the user stands on the grating in the main lane 8, the user can always block and/or unblock the shuttle, either via the manual braking handle 17 or via the blocking element 19, as shown in Figure 5a. The blocking element 19 may be movable between a blocking position and a free position, the blocking element 19 being configured to engage the first track 6a in the blocking position. In this way, the user can block the intervention shuttle, even if the user cannot easily reach the manual braking handle 17 or any additional knob.

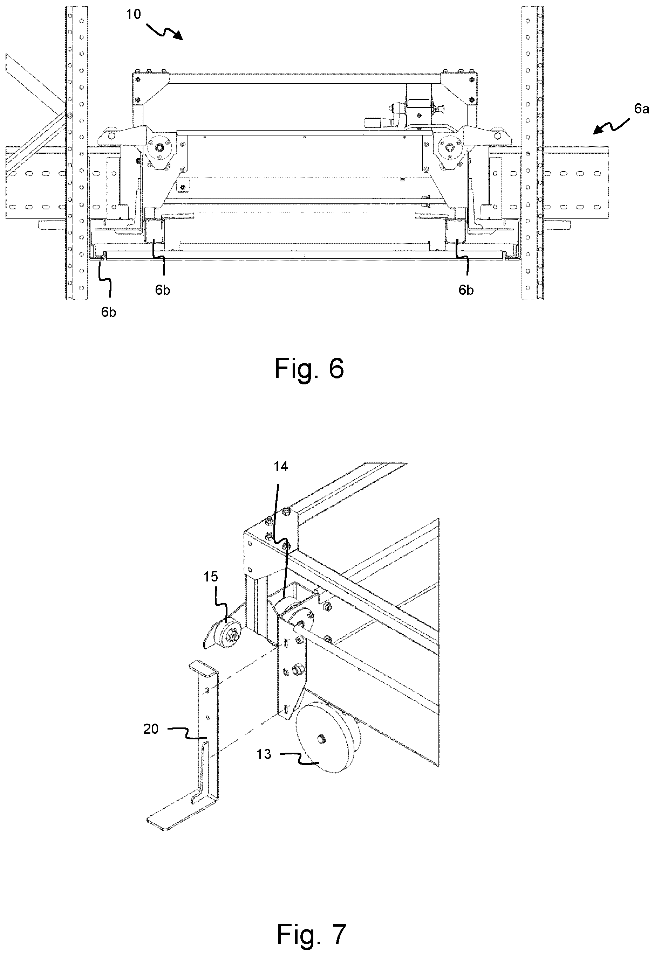

Fig. 6 shows a side view of the intervention shuttle of Figure 2 before insertion into a storage lane 4. When the intervention shuttle 10 is moving in the main lane 8, the intervention shuttle 10 may be provided with tilt protection hooks 20 configured to extend outwardly and sidewise when seen in the direction 9 of the main lane 8. At a crossing of a main lane 8 with a storage lane 4, the tilt protection hooks may be configured to extend under the rails of the first track 6a in the storage lane 4. The main lane 8 may additionally be provided with an additional pair of rails 21 having a C-shaped cross-section. Said additional pair of rails 21 can be positioned substantially in parallel to the second track 6b, for example at a distance of said second track 6b and to an outside of the second track 6b such that respective openings of the C-shaped rails are facing each other. The tilt protection hooks 20 can then be configured to extend into said respective openings of the additional pair of C-shaped rails 21 such that the intervention shuttle 10 cannot be tilted in the main lane 8.

Figure 7 shows an enlargement of a corner of the intervention shuttle shown in Figure 2. The tilt protection hooks are mounted to the intervention shuttle 10 in a removable way, for example by a sliding attachment or by screwing said tilt protection hooks 20 to the intervention shuttle, or in any other way, in particular to a side of the intervention shuttle 10 as seen in the direction 9 of the main lane 8. The intervention shuttle 10 can for example include a set of four tilt protection hooks, such that one tilt protection hook can be mounted near each corner of the intervention shuttle 10. Alternatively, a set of two tilt protection hooks can also provide stability when mounting one of said two tilt protection hooks 20 to the two opposing sides of the intervention shuttle 10 seen in the direction 9 of the main lane 8. In Figure 7, it is shown that it is preferable to have one wheel of each set of wheels positioned near a corner of the intervention shuttle 10. A wheel of the first set of wheels 13 is preferably mounted substantially under the intervention shuttle 10, while a wheel of the second set of wheels 14 and a wheel of the third set of wheels 15 are preferably mounted to a side of the intervention shuttle 10 when seen in direction 5 of the storage lane 4.

Fig. 8 shows a side view of the intervention shuttle of Figure 2 when inserted into a storage lane 4. When an intervention shuttle 10 needs to change from a main lane 8 to a storage lane 4, the user will first need to align the intervention shuttle 10 with the storage lane 4. When the user gets out of the intervention shuttle onto the grating of the main lane 8, the intervention shuttle 10 will automatically be braked, preferably on both the first set of wheels 13 as well as on the second set of wheels 14 since the user needs to release the manual braking handle 17. In a first step, the tilt protection hooks 20 can be taken off. The user can then preferably put the brake lock 17b into a locked position such that the first set of wheels 13 and the second set of wheels 14 are free. In a next step, the user can lift a backside of the intervention shuttle 10, the backside being the side opposite the direction into which the intervention shuttle 10 is changing. Since a weight of the intervention shuttle 10 is preferably lower than 40 kgs, a single user can lift and manipulate the intervention shuttle. The user can then insert the intervention shuttle 10 into the storage lane 4, by first having two front wheels of the third set of wheels 15 engaging an upper surface 7a of the rails of the first track 6a. Since said third set of wheels are not braked, the user can push and slide the intervention shuttle 10 forward into the storage lane 4. When wheels of the second set of wheels 14 engage the upper surface 7a of the rails of the first track 6a, the user can lower the intervention shuttle 10 and slide the intervention shuttle 10 in a substantially horizontal way. Before getting into the intervention shuttle 10, the user needs to block the shuttle again. Depending on an orientation of the intervention shuttle, the user can block the intervention shuttle either by unlocking the brake lock 17b, which had been previously locked, or by using the blocking element 19, as shown in Figure 5a. Since the drive unit 18 including the manual braking handle 17 and the brake lock 17b is on the front side of the intervention shuttle 10 at a distance of the main lane 8 in Figure 8, the user would need to use the blocking element 19. Then the user can get into the intervention shuttle 10 again and can continue its way along a storage lane 4 by simultaneously operating the manual braking handle 17 and the crank drive handle 16. When changing from a storage lane 4 into a main lane 8, these steps can be executed in reverse order.

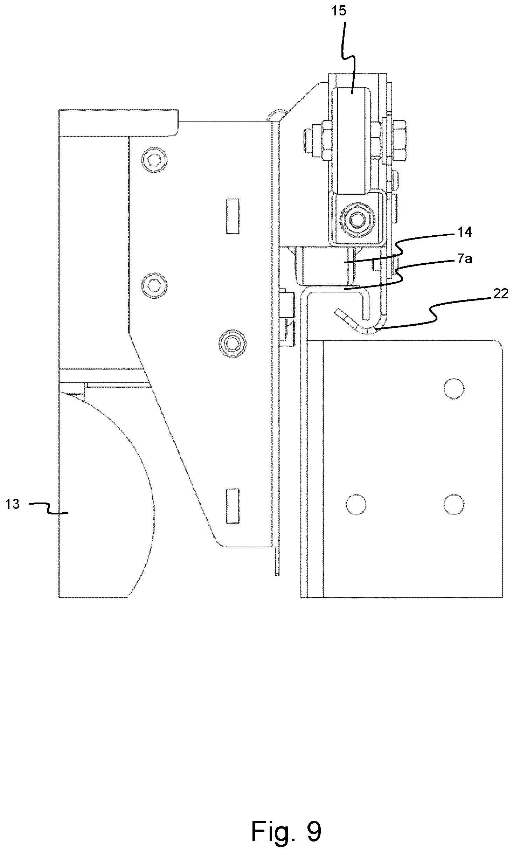

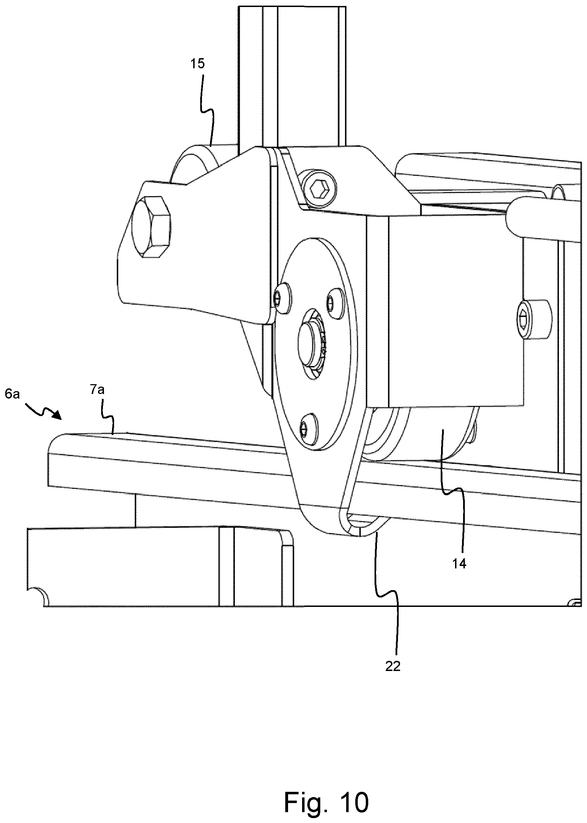

Fig. 9 and 10 illustrate a front view and a perspective view respectively on two wheels, one wheel of the second set and one of the third set of wheels respectively. The intervention shuttle 10 can include tilt protection elements 22 configured to prevent tilting of the intervention shuttle when used on a first track 6a in a storage lane 4. Said tilt protection elements 22 may for example be fixedly mounted to the intervention shuttle. The tilt protection elements 22 may at least partly cover a wheel of the second set of wheels 14 and may be configured to extend at least partly under the upper surface 7a of a rail 7 of the first track 6a. A shape of the tilt protection elements 22 may be adapted to a shape of the rail 7 of the first track 6a. Said rail 7 may for example include a downwardly extending flange around which the tilt protection elements 22 may extend. In this way, the intervention shuttle 10 can be protected against tilting on a first track 6a of a storage lane 4 while not hindering movement of the intervention shuttle on a main lane 8. Figures 9 and 10 also show that a diameter of the wheels of the third set of wheels 15 is not larger than a diameter of wheels of the second set of wheels 14 and that the second set of wheels 14, in particular a rotation axis of said second set of wheels 14, is mounted lower to the intervention shuttle 10 than the third set of wheels 15, in particular a rotation axis of said third set of wheels, such that wheels of the third set 15 only engage an upper surface 7a of a rail 7 of the first track 6a in a tilted position of the intervention shuttle 10, as shown in Figure 8. A difference in diameter between wheels of the second set and of the third set does not compensate for a difference in mounting height of the wheels to the intervention shuttle 10.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An intervention shuttle for human intervention in an automated warehouse, the warehouse including at least one storage lane along a first direction and at least one transit lane along a second direction transverse to the first direction, wherein the intervention shuttle is configured to be driven manually on a first track extending along the at least one storage lane and on a second track extending along the at least one transit lane, wherein at least part of the first track and the second track is located in a first substantially horizontal plane, wherein the intervention shuttle includes a first set of at least four wheels configured to engage one of the first track and the second track, wherein the intervention shuttle includes a second set of at least four wheels configured to engage the other of the first track and the second track, wherein the second set of wheels is configured to engage said other of the first track and the second track in a second substantially horizontal plane located above or beneath the first substantially horizontal plane.

2. The intervention shuttle according to claim 1, wherein the intervention shuttle includes a third set of at least two wheels configured to engage said other of the first track and the second track in the second substantially horizontal plane, wherein the at least two wheels of the third set extend beyond a contour of the shuttle.

3. The intervention shuttle according to claim 2, wherein the third set of wheels are mounted to the intervention shuttle at a height which is higher than a height at which the second set of wheels are mounted to the intervention shuttle.

4. The intervention shuttle according to any of the preceding claims, wherein the first set of wheels is configured to engage the second track in the first substantially horizontal plane, and wherein the second set of wheels is configured to engage the first track in the second substantially horizontal plane.

5. The intervention shuttle according to any of the preceding claims, wherein the third set of wheels includes at least four wheels, wherein the at least four wheels of the third set extend beyond a contour of the shuttle.

6. The intervention shuttle according to any of the preceding claims, wherein the intervention shuttle has a substantially rectangular shape including four corners, wherein the wheels of each of the first set and the second set are located adjacent said corners.

7. The intervention shuttle according to any of the preceding claims, wherein at least two wheels, and preferably each wheel, of one of the first set of wheels and the second set of wheels, preferably of the first set of wheels, configured to engage the second track extending along the at least one transit lane include a first portion on a first side of the wheel and a second portion on a second side facing away from said first side, the first portion having a first diameter which is larger than a second diameter of said second portion.

8. The intervention shuttle according to any of the preceding claims, wherein the intervention shuttle includes at least one brake configured to brake the first set of wheels and the second set of wheels simultaneously.

9. The intervention shuttle according to claim 8, wherein the intervention shuttle includes:
a. a manual braking handle configured to release the at least one brake of the shuttle;
b. a manual crank drive configured to allow driving said intervention shuttle along the first and/or second track;
wherein the intervention shuttle is configured to move along the first and/or second track by simultaneously operating the manual braking handle and the manual crank drive.

10. The intervention shuttle according to any of the preceding claims, the shuttle comprising a blocking element configured to extend under the shuttle, wherein the blocking element is movable between a blocking position and a free position, wherein the blocking element is configured to engage the first track in the blocking position.

11. The intervention shuttle according to any of the preceding claims, the shuttle comprising at least one pair of removable tilt protection hooks configured to extend outwardly from the shuttle.

12. The intervention shuttle according to any of the preceding claims, the shuttle comprising a safety bar along at least one side of the shuttle.

13. The intervention shuttle according to any of the preceding claims, wherein a height of the shuttle is lower than 0.5 m.

14. The intervention shuttle according to any of the preceding claims, wherein a weight of the shuttle is lower than substantially 40kgs.
